# EUROPÄISCHE PATENTSCHRIFT

(11) **EP 1 496 209 B1**
(45) Veröffentlichungstag und Bekanntmachung des Hinweises auf die Patenterteilung: **25.06.2014**
(21) Anmeldenummer: 04015747.1
(22) Anmeldetag: 05.07.2004
(51) Int. Cl.: F01D 25/16, F01D 25/12

(54) **Lageranordnung für eine Gasturbine**
Bearing arrangement for a gas turbine
Arrangement de paliers pour une turbine à gaz

(30) Priorität: 08.07.2003 DE 10330829
(43) Veröffentlichungstag der Anmeldung: 12.01.2005
(73) Patentinhaber: MTU Aero Engines AG, 80995 München (DE)
(72) Erfinder: Flouros, Michael, Dr., 80686 München (DE); Streifinger, Helmut, 81369 München (DE)

(56) Entgegenhaltungen:
- EP-A1- 0 012 447
- DE-A1- 3 345 721
- US-A- 2 271 820
- US-A- 4 103 759
- US-A- 4 181 379

## Beschreibung

Die Erfindung betrifft eine Lageranordnung für eine Gasturbine, insbesondere für ein Flugzeugtriebwerk, nach dem Oberbegriff des Patentanspruchs 1.

Gasturbinen, insbesondere Flugzeugtriebwerke, werden bei hohen Drehzahlen betrieben. So rotiert zum Beispiel bei derartigen Flugzeugtriebwerken ein Rotor gegenüber einem feststehenden Stator, wobei die Drehbarkeit des Rotors gegenüber dem Stator durch hochentwickelte Lageranordnungen gewährleistet wird.

Aus der DE 36 04 625 C2 ist eine Lageranordnung für eine Gasturbine bekannt. Gemäß der DE 36 04 625 C2 ist auf einem Rotor ein als Wälzlager ausgeführtes Lager angeordnet, wobei das Wälzlager über einen innenliegenden Lagerring an dem Rotor und über einen außenliegenden Lagerring an einem Stator, nämlich an einem Gehäuse, angreift. Zwischen dem innenliegenden Lagerring und dem außenliegenden Lagerring sind gemäß der DE 36 04 625 C2 Wälzkörper angeordnet.

Andere Lageranordnungen gemäß dem Stand der Technik sind aus EP 0012447 und DE 3345721 bekannt.

Hiervon ausgehend liegt der vorliegenden Erfindung das Problem zu Grunde, eine neuartige Lageranordnung für eine Gasturbine vorzuschlagen.

Dieses Problem wird dadurch gelöst, dass die eingangs genannte Lageranordnung für eine Gasturbine durch die Merkmale des kennzeichnenden Teils des Patentanspruchs 1 weitergebildet ist.

Erfindungsgemäß sind die Wälzkörper zur Schmierung und/oder Kühlung von Öl umströmt ist, wobei mindestens ein durchlässiges, vorzugsweise gitterförmiges, Element die Lageranordnung zur gezielten Abführung des Öls zumindest bereichsweise umschließt. Das die Wälzkörper umströmende Öl trifft auf eine Innenseite des oder jeden durchlässigen Elements, durchströmt das oder jedes durchlässige Element und ist auf einer Außenseite des oder jeden durchlässigen Elements als Ölstrom gezielt abführbar. Eine Vernebelung bzw. Verschäumung des Öls in der Lageranordnung wird durch die Erfindung minimiert, so dass Leistungsverluste an der Gasturbine minimiert werden.

Bevorzugte Weiterbildungen der Erfindung ergeben sich aus den abhängigen Unteransprüchen und der nachfolgenden Beschreibung.

Ausführungsbeispiele der Erfindung werden, ohne hierauf beschränkt zu sein, an Hand der Zeichnung näher erläutert. In der Zeichnung zeigt:
- Fig. 1:: einen Querschnitt durch eine erfindungsgemäße Lageranordnung für eine Gasturbine; und
- Fig. 2:: ein vergrößertes Detail der Darstellung gemäß Fig. 1.

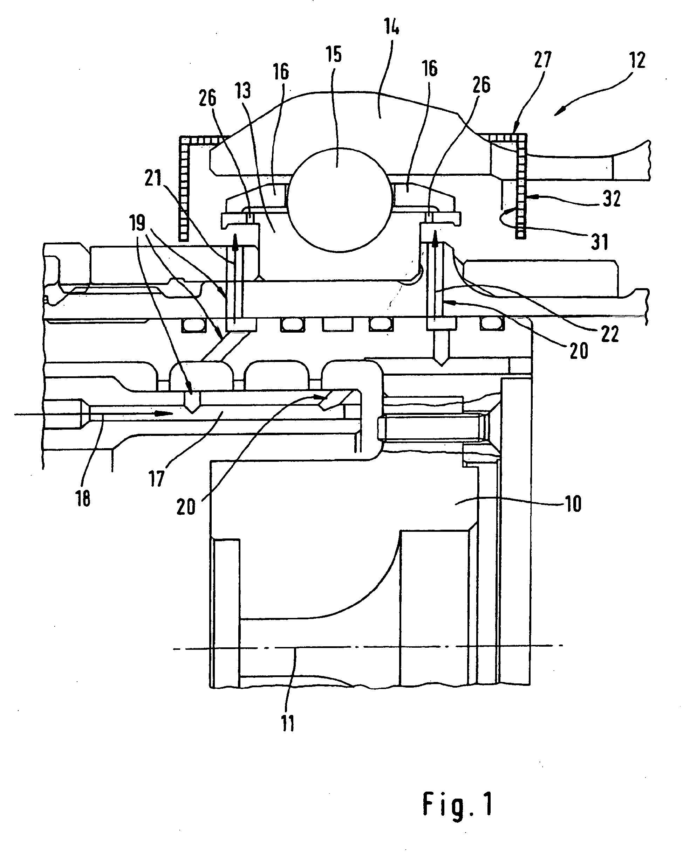

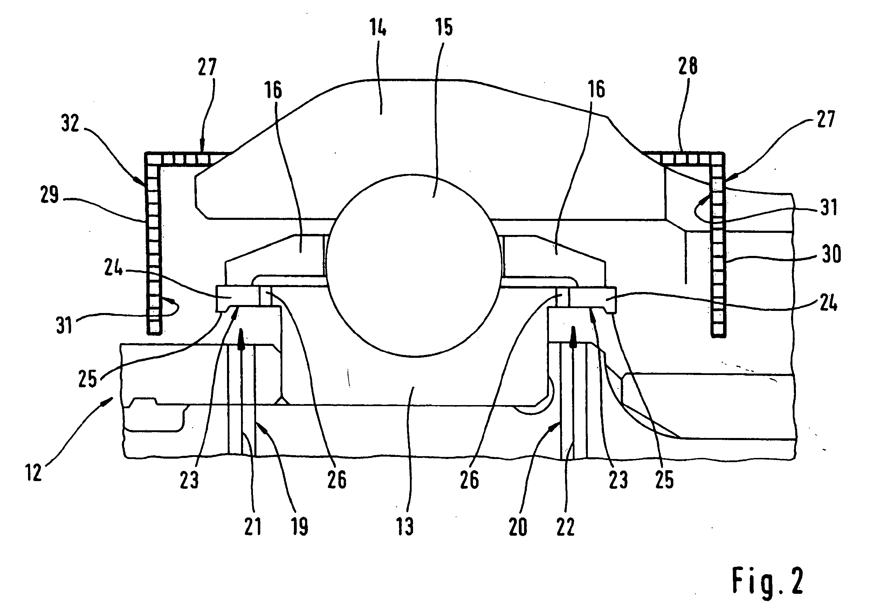

Nachfolgend wird die erfindungsgemäße Lageranordnung unter Bezugnahme auf Fig. 1 und 2 in größerem Detail erläutert. Fig. 1 zeigt einen Querschnitt durch eine Gasturbine im Ausschnitt mit einer erfindungsgemäßen Lageranordnung. Fig. 2 zeigt ein vergrößertes Detail der Darstellung der Fig. 1.

Fig. 1 zeigt einen Rotor 10 einer als Flugzeugtriebwerk ausgebildeten Gasturbine, wobei der Rotor 10 eine Drehachse 11 aufweist. Der Rotor 10 dreht sich mit hoher Drehzahl gegenüber einem nicht-dargestellten Gehäuse bzw. Stator. Der Rotor 10 ist über eine Lageranordnung 12 drehbar im Gehäuse bzw. Stator gelagert. So umfasst die Lageranordnung 12 des Ausführungsbeispiels gemäß Fig. 1 einen innenliegenden Lagerring 13 und einen außenliegenden Lagerring 14. Der innenliegende Lagerring 13 ist mit dem Rotor 10 verbunden und dreht sich mit demselben relativ zum Gehäuse. Der außenliegende Lagerring 14 ist mit dem Gehäuse verbunden und daher feststehend. Zwischen dem innenliegenden, rotierenden Lagerring 13 und dem außenliegenden, feststehenden Lagerring 14 sind Wälzkörper 15 angeordnet. Die Wälzkörper 15 sind von einem Lagerkäfig 16 umgeben, wobei der Lagerkäfig 16 ebenfalls zwischen dem innenliegenden, rotierenden Lagerring 13 und dem außenliegenden, feststehenden Lagerring 14 angeordnet ist.

Zur Schmierung und Kühlung der Lageranordnung 12, insbesondere der Wälzkörper 15, werden die Wälzkörper 15 von Öl umströmt. So zeigt Fig. 1 einen in den Rotor 10 eingebrachten Kanal 17, der sich in axialer Richtung des Rotors 10 erstreckt, jedoch axial versetzt zur Drehachse 11 des Rotors 10 angeordnet ist. Gemäß dem Pfeil 18 wird durch den Kanal 17 Öl geleitet. Ausgehend vom sich in axialer Richtung erstreckenden Kanal 17 zweigen vom Kanal 17 ebenfalls als Kanäle 19, 20 ausgebildete Zuleitungen ab, wobei über diese Zuleitungen im Sinne der Pfeile 21 und 22 das Öl in Richtung auf die erfindungsgemäße Lageranordnung 12 bewegt wird. Die Kanäle 19 und 20 verlaufen im Wesentlichen in radialer Richtung.

Wie bereits erwähnt, handelt es sich bei dem Rotor 10 der Gasturbine um ein mit hoher Drehzahl rotierendes Bauteil. Bei hohen Drehzahlen, die bei Flugzeugtriebwerken bzw. sonstigen Gasturbinen üblich sind, treten hohe Fliehkräfte bzw. Zentrifugalkräfte auf, die für eine Pumpwirkung und damit für die Strömung des Öls durch die Kanäle 17, 19 und 20 im Sinne der Pfeile 18, 21 und 22 sorgen. Das aus den Kanälen 19 und 20 austretende Öl trifft auf eine Unterseite 23 von seitlichen Vorsprüngen 24 des innenliegenden Lagerrings 13. Zu beiden Seiten des innenliegenden Lagerrings ist jeweils ein derartiger Vorsprung 24 vorgesehen. An den seitlichen Enden der Vorsprünge 24 verfügen dieselben über Fangnasen 25. Die Fangnasen 25 sorgen dafür, dass das auf die Unterseite 23 der Vorsprünge 24 auftreffende Öl auf der Unterseite 23 gehalten wird und dort einen Ölfilm bildet. Neben den Fangnasen 25 verfügen die Vorsprünge 24 weiterhin über Bohrungen 26, die die Fangnasen 24 in radialer Richtung durchdringen. Das aus den Kanälen 19, 20 austretende und auf die Unterseite 23 der Vorsprünge 24 auftreffende Öl wird bedingt durch die bei der Rotation auftretenden Fliehkräfte durch sich in radialer Richtung erstreckenden Bohrungen 26 gedrückt, trifft dann auf den Lagerkäfig 16 und gelangt sodann schließlich in den Bereich der Wälzkörper 15, wobei die Wälzkörper 15 dann vom Öl umströmt werden. Das die Wälzkörper 15 umströmende Öl dient der Schmierung und Kühlung der Lageranordnung 12.

Bei der erfindungsgemäßen Lageranordnung 12 sind gemäß dem gezeigten Ausführungsbeispiel dem außenliegenden, feststehenden Lagerring 14 zwei durchlässige, nämlich öldurchlässige, Elemente 27 zugeordnet. Die öldurchlässigen Elemente 27 verfügen gemäß Fig. 2 über einen im Wesentlichen L-förmigen Querschnitt. Ein Schenkel 28 der öldurchlässigen Elemente 27 erstreckt sich in axialer Richtung und ist fest mit dem feststehenden, äußeren Lagerring 14 verbunden. Alternativ kann der in axialer Richtung verlaufende Schenkel 28 auch am äußeren Lagerring 14 anliegen und am Stator befestigt sein. An die Schenkel 28 schließen sich radial verlaufende Schenkel 29 und 30 der öldurchlässigen Element 27 an. Die Schenkel 29 und 30 erstrecken sich in radialer Richtung. Die öldurchlässigen Elemente 27 sind feststehend.

Es liegt im Sinne der hier vorliegenden Erfindung, dass die öldurchlässigen Elemente 27 die Lageranordnung 12, nämlich den äußeren, feststehenden Lagerring 14, die Wälzkörper 15 sowie den innenliegenden, rotierenden Lagerring 13 zumindest abschnittsweise bzw. bereichsweise umschließen. Hierdurch ist gewährleistet, dass das die Wälzkörper 15 zur Schmierung und Kühlung umströmende Öl vorzugsweise nach der Umströmung der Wälzkörper 15 auf eine Innenseite 31 der öldurchlässigen Elemente 27 gelangt. Das Öl sammelt sich demnach auf der Innenseite 31 der öldurchlässigen Elemente 27 und durchdringt dieselben. Nach dem Durchdringen der öldurchlässigen Elemente 27 sammelt sich das Öl auf einer Außenseite 32 derselben und ist auf der Außenseite 32 der öldurchlässigen Elemente 27 als Ölstrom gezielt und geordnet abführbar. Mithilfe der öldurchlässigen Elemente 27, welche die Lageranordnung 12 zumindest bereichsweise umschließen, wird demnach vermieden, dass das die Wälzlager 15 umströmende Öl im gesamten Lagerraum verspritzt, vernebelt bzw. verschäumt. Vielmehr wird das Öl von den öldurchlässigen Elementen 27 aufgefangen und zu einem Ölfilm bzw. Ölstrom gebündelt, der geordnet abgeführt werden kann. Mithilfe der erfindungsgemäßen Lageranordnung 12 wird demnach die Verweilzeit bzw. die Residenzzeit des Öls im Bereich der Lager enorm verkürzt. Leistungsverluste, die durch die Interaktion des Öl mit dem Lager auftreten können, werden vermieden. Insofern werden Leistungsverluste an der Gasturbine durch die erfindungsgemäße Lageranordnung deutlich minimiert.

Die öldurchlässigen Elemente sind im gezeigten Ausführungsbeispiel als gitterförmige Elemente 27, vorzugsweise als poröse Bleche, ausgebildet, welche eine Vielzahl von Löchern aufweisen, die in die radial verlaufenden Schenkel 29 und 30 sowie in die axial verlaufenden Schenkel 28 des gitterförmigen Elements 27 eingebracht sind. Durch diese Löcher kann das Öl von der Innenseite 31 des gitterförmigen Elements auf die Außenseite 32 desselben gelangen. Anstelle eines Metallblechs können jedoch auch andere ölresistente Abdeckungen bzw. Verkleidungen verwendet werden, um ein öldurchlässiges Element 27 zu bilden. So können die Elemente 27 auch als Filze, als metallische oder keramische Bürsten, als offenporige Schwämme oder als Drahtgeflecht ausgebildet sein.

Es sei darauf hingewiesen, dass auch ein einziges öldurchlässiges Element 27 zum Einsatz kommen kann. Die Anzahl der Elemente 27 hängt von der konkreten Lageranordnung ab.

In Abweichung vom gezeigten Ausführungsbeispiel kann das oder jedes öldurchlässige Element auch einen mehrfach gekrümmten oder ebenen, vorzugsweise scheibenförmigen oder ringförmigen, Querschnitt aufweisen. Die öldurchlässigen Elemente können weiterhin einteilig oder mehrteilig ausgeführt sein.

Wie bereits erwähnt, ist ein Hauptvorteil der erfindungsgemäßen Lageranordnung darin zu sehen, dass die Verweilzeit des Öls im Bereich der Lager verkürzt wird und damit Leistungsverluste der Gasturbine minimiert werden können. Durch die geringere Verweilzeit des Öls im Lager wird weiterhin weniger Wärme an das Öl übertragen. Demnach können in einer Gasturbine, welche die erfindungsgemäße Lageranordnung aufweist, kleinere Ölkühler eingesetzt werden. Hierdurch kann das Gewicht der Gasturbine reduziert werden. Eine Gewichtsreduzierung der Gasturbine macht dieselbe noch effizienter. Durch die verringerte Wärmeabgabe an das Öl wird auch die Verkokungsgefahr sowie Feuergefahr an der Gasturbine reduziert.

## Patentansprüche

1. Lageranordnung für eine Gasturbine, insbesondere für ein Flugzeugtriebwerk, mit mindestens einem innenliegenden Lagerring (13) und mindestens einem außenliegenden Lagerring (14), wobei vorzugsweise der oder jeder innenliegende Lagerring (13) zusammen mit einem Rotor (10) rotiert, und wobei vorzugsweise der oder jeder außenliegende Lagerring (14) gegenüber dem Rotor (10) und dem oder jedem innenliegenden Lagerring (13) stillsteht, und mit zwischen dem oder jedem innenliegenden Lagerring (13) und dem oder jedem außenliegenden Lagerring (14) angeordneten Wälzkörpern (15), wobei der Bereich der Wälzkörper (15) zur Schmierung und/oder Kühlung von Öl durchströmt ist,
**dadurch gekennzeichnet, dass** mindestens ein durchlässiges Element (27) die Lageranordnung (12) zur gezielten Abführung des Öls zumindest bereichsweise derart umschließt, dass das die Wälzkörper umströmende Öl auf eine Innenseite (31) des oder jeden durchlässigen Elements (27) trifft. das oder jedes durchlässige Element (27) durchströmt und auf einer Außenseite (32) des oder jeden durchlässigen Elements (27) als Ölstrom gezielt abführbar ist.

2. Lageranordnung nach Anspruch 1, **dadurch gekennzeichnet, dass** das oder jedes öldurchlässige Element (27) an dem oder jedem feststehenden, außenliegenden Lagerring (14) oder an einem Element des Stators angeordnet ist.

3. Lageranordnung nach Anspruch 1 oder 2, **dadurch gekennzeichnet, dass** das oder jedes öldurchlässige Element (27) den oder jeden außenliegende Lagerring (14) und den oder jeden innenliegenden Lagerring (13) zumindest bereichsweise umschließt.

4. Lageranordnung nach einem oder mehreren der Ansprüche 1 bis 3, **dadurch gekennzeichnet, dass** das oder jedes öldurchlässige Element (27) einen L-förmigen Querschnitt mit einem radial verlaufenden Schenkel (29, 30) und einem axial verlaufenden Schenkel (28) aufweist.

5. Lageranordnung nach einem oder mehreren der Ansprüche 1 bis 3, **dadurch gekennzeichnet, dass** das oder jedes öldurchlässige Element (27) einen mehrfach gekrümmten Querschnitt aufweist.

6. Lageranordnung nach einem oder mehreren der Ansprüche 1 bis 3, **dadurch gekennzeichnet, dass** das oder jedes öldurchlässige Element (27) einen ebenen, insbesondere scheibenförmigen oder ringförmigen, Querschnitt aufweist.

7. Lageranordnung nach einem oder mehreren der Ansprüche 1 bis 6, **dadurch gekennzeichnet, dass** das oder jedes öldurchlässige Element (27) einteilig oder mehrteilig ausgebildet.ist.

8. Lageranordnung nach einem oder mehreren der Ansprüche 1 bis 7, **dadurch gekennzeichnet, dass** das oder jedes öldurchlässige Element (27) als Lochblech oder als Gitter oder als offenporiger Schwamm oder als Filz oder als Bürste ausgebildet ist.

## Claims

1. Bearing arrangement for a gas turbine, in particular for an aircraft engine, having at least one interior bearing ring (13) and at least one exterior bearing ring (14), wherein the or
each interior bearing ring (13) preferably rotates together with a rotor (10), and wherein the or each exterior bearing ring (14) preferably remains stationary relative to the rotor (10) and the or each interior bearing ring (13), and having rolling elements (15) arranged between the or each interior bearing ring (13) and the or each exterior bearing ring (14), wherein the region of the rolling elements (15) has oil flowing through it for lubrication and/or cooling purposes,
**characterised in that** at least one permeable element (27) encloses the bearing arrangement (12) at least in certain regions for the targeted discharge of the oil in such a way that the oil flowing around the rolling elements strikes an inner side (31) of the or each permeable element (27), flows through the or each permeable element (27) and can be discharged in a targeted manner as an oil flow on an outer side (32) of the or each permeable element (27).

2. Bearing arrangement according to claim 1, **characterised in that** the or each oil-permeable element (27) is arranged on the or each fixed, exterior bearing ring (14) or on an element of the stator.

3. Bearing arrangement according to claim 1 or 2,
**characterised in that** the or each oil-permeable element (27) encloses the or each exterior bearing ring (14) and the or
each interior bearing ring (13) at least in certain regions.

4. Bearing arrangement according to one or more of claims 1 to 3, **characterised in that** the or each oil-permeable element (27) has an L-shaped cross-section with a limb (29, 30) running radially and a limb (28) running axially.

5. Bearing arrangement according to one or more of claims 1 to 3, **characterised in that** the or each oil-permeable element (27) has a cross-section with multiple curves.

6. Bearing arrangement according to one or more of claims 1 to 3, **characterised in that** the or each oil-permeable element (27) has a planar, in particular disc-shaped or annular, cross-section.

7. Bearing arrangement according to one or more of claims 1 to 6, **characterised in that** the or each oil-permeable element (27) is formed as a single part or to have multiple parts.

8. Bearing arrangement according to one or more of claims 1 to 7, **characterised in that** the or each oil-permeable element (27) is formed as a perforated sheet or as a grating or as an openpored sponge or as felt or as a brush.

## Revendications

1. Dispositif de palier pour une turbine à gaz, en particulier pour un moteur d'avion, avec au moins une bague de palier intérieure (13) et au moins une bague de palier extérieure (14), la bague de palier ou chaque bague de palier intérieure (13) tournant préférentiellement avec un rotor (10), et la bague de palier ou chaque bague de palier extérieure (14) étant préférentiellement à l'arrêt par rapport au rotor (10) et à la bague ou aux bagues de palier intérieures (13), et avec des corps de roulement (15) disposés entre la bague de palier ou chaque bague de palier intérieure (13) et la bague de palier ou chaque bague de palier intérieure (14), de l'huile s'écoulant dans la zone des corps de roulement (15) pour la lubrification et/ou le refroidissement, **caractérisé en ce qu'**au moins un élément (27) perméable à l'huile entoure au moins partiellement ledit dispositif de palier (12) pour une évacuation ciblée de l'huile, de telle manière que l'huile s'écoulant autour des corps de roulement rencontre une face intérieure (31) de l'élément ou de chaque élément perméable (27), s'écoule par l'élément ou par chaque élément perméable (27) et soit évacuable de manière ciblée sur une face extérieure (32) de l'élément ou de chaque élément perméable (27).

2. Dispositif de palier selon la revendication 1, **caractérisé en ce que** l'élément ou chaque élément perméable (27) est disposé contre la bague de palier ou chaque bague de palier extérieure (14) fixe ou contre un élément du stator.

3. Dispositif de palier selon la revendication 1 ou 2, **caractérisé en ce que** l'élément ou chaque élément perméable (27) entoure au moins partiellement la bague de palier ou chaque bague de palier extérieure (14) et la bague de palier ou chaque bague de palier intérieure (13).

4. Dispositif de palier selon l'une ou plusieurs des revendications 1 à 3, **caractérisé en ce que** l'élément ou chaque élément perméable (27) a une section transversale en forme de L avec une branche (29, 30) à extension radiale et une branche (28) à extension axiale.

5. Dispositif de palier selon l'une ou plusieurs des revendications 1 à 3, **caractérisé en ce que** l'élément ou chaque élément perméable (27) a une section transversale à courbes multiples.

6. Dispositif de palier selon l'une des revendication 1 à 3, **caractérisé en ce que** l'élément ou chaque élément perméable (27) a une section transversale plane, notamment de forme circulaire ou annulaire.

7. Dispositif de palier selon l'une ou plusieurs des revendications 1 à 6, **caractérisé en ce que** l'élément ou chaque élément perméable (27) est réalisé en ur.e ou plusieurs pièces.

8. Dispositif de palier selon l'une ou plusieurs des revendications 1 à 7, **caractérisé en ce que** l'élément ou chaque élément perméable (27) est réalisé comme tôle perforée, comme grille, comme éponge à pores ouverts, comme feutre ou comme brosse.
